# EUROPÄISCHE PATENTSCHRIFT

(11) **EP 3 434 575 B1**
(45) Veröffentlichungstag und Bekanntmachung des Hinweises auf die Patenterteilung: **14.04.2021**
(21) Anmeldenummer: 18181867.5
(22) Anmeldetag: 05.07.2018
(51) Int. Cl.: B62M 9/123, B62M 9/133, B62J 45/40

(54) **VERFAHREN UND VORRICHTUNG ZUR IDENTIFIKATION DER ÜBERSETZUNG AN EINEM ZWEIRAD**
METHOD AND DEVICE FOR IDENTIFYING THE RATIO ON A TWO-WHEELER
PROCÉDÉ ET DISPOSITIF D'IDENTIFICATION DE LA TRANSMISSION SUR UN DEUX-ROUES

(30) Priorität: 27.07.2017 DE 102017212946
(43) Veröffentlichungstag der Anmeldung: 30.01.2019
(73) Patentinhaber: Robert Bosch GmbH, 70442 Stuttgart (DE)
(72) Erfinder: Dackermann, Tim, 72072 Tuebingen (DE); Greiner, Rinaldo, 72762 Reutlingen (DE)

(56) Entgegenhaltungen:
- EP-A1- 2 610 159
- DE-A1-102014 210 522
- US-A1- 2012 042 725

## Beschreibung

Die Erfindung betrifft ein Verfahren und eine Auswerteeinheit zur Erfassung eines Übersetzungsverhältnisses an einem Fahrrad, insbesondere einem Elektrofahrrad, sowie ein Fahrrad mit einer derartigen Auswerteeinheit.

### Stand der Technik

Die automatische Erfassung von Übersetzungsverhältnissen bei Fahrrädern wird durch den Einsatz elektronische Gangschaltungen immer bedeutsamer. Auch bei der Verwendung eines Antriebsmotors bei Elektrofahrrädern kann die Information über das vorliegende Übersetzungsverhältnis zwischen der Tretkurbel bzw. dem Antriebsmotor und dem Hinterrad hilfreich sein, um eine für den Fahrer gefälligere und einheitliche Ansteuerung des Motors zu ermöglichen.

An Fahrräder mit einem Geschwindigkeitssensor am Hinterrad (oder auch am Vorderrad) und einer Trittfrequenzmessung lässt sich leicht das Gesamtübersetzungsverhältnis zwischen Antrieb und Hinterrad ermitteln. Bei Elektrofahrrädern lässt sich dieses Gesamtübersetzungsverhältnis alternativ auch mit Hilfe einer Motorlagensensorik oder einer Motorstrommessung ableiten. Aus dem Verhältnis zwischen der Drehzahl am Hinterrad und dem Antriebsmotor lässt sich darüber hinaus zusätzlich auch der eingelegte Gang über eine längere Erfassungsdauer ableiten.

Mit diesen Verfahren ist jedoch die Ableitung von Übersetzungsverhältnissen zwischen der Tretkurbel bzw. dem Antriebsmotor und der Fahrradkette sowie zwischen der Fahrradkette und dem Hinterrad nicht direkt bestimmen. Dies erlaubt insbesondere nicht die individuelle Steuerung der Gangschaltung oder des Antriebs bei der Verwendung von mehreren Kettenblättern an der Tretkurbel als auch bei den üblichen Zahnkränze am Hinterrad Dokument EP2610159A1 zeigt die Präambel der unabhängigen Ansprüche 1, 6 und 9.

Mit der vorliegenden Erfindung soll ein Verfahren und eine Vorrichtung beschrieben werden, welche in einfacher Weise aufgrund von Messwertsignalen eine Information über die am Fahrrad vorliegenden Übersetzungsverhältnisse liefert.

### Offenbarung der Erfindung

Ausgangspunkt der Erfindung ist ein Fahrrad oder auch ein Elektrofahrrad, bei dem ein Magnetfeldsensor zur Erfassung von Magnetfeldsignalen am oder im Rahmen angeordnet ist bzw. indirekt mit diesem fest gekoppelt sein. Weiterhin ist eine Antriebeinheit vorgesehen, die eine Tretkurbel und/oder einen Elektromotor aufweist. Dabei kann der Antrieb des Fahrrads sowohl ganz oder teilweise mittels Muskelkraft oder dem Elektromotor erzeugt werden. Der Magnetfeldsensor kann dabei auch im oder am Elektromotor oder seinem Gehäuse befestigt sein und somit ebenfalls mit dem Rahmen gekoppelt sein. Weiterhin ist bei dem Fahrrad ein Abtriebsrad mit einer Gangschaltung vorgesehen, welche über ein Übertragungsmittel, z.B. einer Fahrradkette oder einem Riemen, mit der Antriebseinheit gekoppelt ist. Zur erfindungsgemäßen Ableitung eines am Fahrrad vorliegenden Übersetzungsverhältnisses ist vorgesehen, dass die Drehzahl der Antriebseinheit, z.B. die Trittfrequenz, die Motordrehzahl und die Drehzahl des Abtriebsrads erfasst wird. Der Kern der Erfindung besteht dabei darin, dass mittels des Magnetfeldsensors die Umlauffrequenz des Übertragungsmittels erfasst wird und aus der Drehzahl der Antriebseinheit und der Drehzahl des Abtriebsrads eine erste Übersetzungsgröße erzeugt wird, die das Gesamtübersetzungsverhältnis zwischen Antriebseinheit und Abtriebsrad darstellt. Weiterhin kann aus den Magnetfeldsensorsignalen der Drehzahl der Antriebseinheit und der Drehzahl des Abtriebsrads eine zweite Übersetzungsgröße erzeugt werden welches das Übersetzungsverhältnis von der Antriebeinheit auf das Übertragungsmittel repräsentiert. Die Erfassung der Umlauffrequenz erfolgt dabei durch wenigstens einen in dem Übertragungsmittel angeordneten Magneten, dessen Bewegung durch den Magnetfeldsensor erfasst wird.

Die Erfindung bietet dabei den Vorteil, dass verschleißfrei eine Übersetzungsgröße am Fahrrad erfasst werden kann, die zu Steuerungszwecken weiterverwendet werden kann. Hierzu ist neben der speziellen Ausgestaltung des Übertragungsmittels lediglich die Verwendung der zum Beispiel bei einem Elektrofahrrad ohnehin vorliegenden Information über die Drehzahl an der Tretkurbel notwendig.

Durch die Kenntnis sowohl der Umlauffrequenz des Übertragungsmittels als auch der Drehzahl der mittels Muskelkraft und/oder elektrischem Motor angetriebenen Antriebseinheit kann eine zweite Übersetzungsgröße erzeugt werden, die das Übersetzungsverhältnis von der Antriebseinheit auf das Übertragungsmittel repräsentiert. Zusammen mit der ersten Übersetzungsgröße kann mit Hilfe dieser zweiten Übersetzungsgröße auf das Übersetzungsverhältnis von dem Übertragungsmittel auf das Abtriebsrad geschlossen werden, ohne dass die Drehzahl am Abtriebsrad separat erfasst werden muss. Dieses Übersetzungsverhältnis am Abtriebsrad repräsentiert beispielsweise den eingelegten Gang der Gangschaltung am Hinterrad eines konventionellen Fahrrads bzw. eines Elektrofahrrads mit Mittelmotorantrieb.

In einer weiteren Ausgestaltung der Erfindung kann vorgesehen sein, die Drehzahl des Abtriebsrads zu erfassen, z.B. mittels eines Reed-Sensors am Hinterrad. Zusammen mit der aus den Magnetfeldsensorsignalen abgeleiteten Umlauffrequenz des Übertragungsmittels kann so eine dritte Übersetzungsgröße erfasst werden, die das Übersetzungsverhältnis zwischen Übertragungsmittel und Abtriebsrad repräsentiert. Ist an dem Abtriebsrad eine Gangschaltung angebracht, z.B. ein Zahnkranz oder eine Kassette, so stellt die dritte Übersetzungsgröße ein Maß für den dort eingelegten Gang dar.

Optional ist auch möglich, mit Hilfe der ersten Übersetzungsgröße, die die Gesamtübersetzung darstellt, und der dritten Übersetzungsgröße, die die Übersetzung am Abtriebsrad bzw. am Hinterrad darstellt, die zweite Übersetzungsgröße abzuleiten, die die Übersetzung zwischen Antriebseinheit und Übertragungsmittel darstellt.

Wie bereits ausgeführt, kann das beschriebene Verfahren auch in einer Auswerteinheit oder als Teil einer Steuereinheit insbesondere bei einem Elektrofahrrad verwendet werden. Dabei kann in einer Ausgestaltung der Erfindung vorgesehen sein, dass der Elektromotor des Elektrofahrrads, der wenigstens teilweise den Vortrieb des Elektrofahrrads erzeugt, in Abhängigkeit der Geschwindigkeit des Elektrofahrrads und/oder der Trittfrequenz bzw. des Trittdrehmoments des Fahrers gesteuert wird. Üblicherweise wird hierzu an der Tretkurbel des Elektrofahrrads die Trittfrequenz und/oder das Tretdrehmoment direkt durch einen Sensor oder indirekt durch die Ableitung aus weiteren Betriebsdaten abgeleitet. Sollte bei der Ableitung jedoch erkannt werden, dass bei der Erfassung des Trittfrequenz und/oder des Tretdrehmoments ein Fehler aufgetreten ist oder es zu unplausiblen Werten kommen, würde für die Steuerung des Elektromotors keine valide und belastbare Größe vorliegen, die die Höchstgeschwindigkeit zur Ansteuerung begrenzt. In einem derartigen Fehlerfall, z.B. falls ein Reed-Sensor zur Erfassung der Hinterradgeschwindigkeit ausfällt, kann die Begrenzung der Ansteuerung des Elektromotors mit der vorliegenden Erfindung trotzdem aufrecht erhalten werden, indem als Grundlage für die Fortbewegungsgeschwindigkeit des Elektrofahrrads die Geschwindigkeit des Übertragungsmittels, z.B. der Kette, bei einer maximal anzunehmenden dritten Übersetzungsgröße. Diese maximal anzunehmende dritte Übersetzungsgröße wird bei Kenntnis der am Abtriebsrad verwendeten Kassette der Gangschaltung entsprechend im System berücksichtigt.

Zur Ausgestaltung des Übertragungsmittels ist vorgesehen, dass in oder an diesem Übertragungsmittel wenigstens ein Magnet angeordnet ist. Es ist jedoch auch möglich, dass mehrere Magnete an oder in dem Übertragungsmittel angeordnet sind. Dabei ist darauf zu achten, dass diese Magnete vorteilhafterweise in Gruppen oder äquidistant über die Länger des Übertragungsmittels angeordnet sind. Weiterhin ist möglich, dass aufeinander folgende Magnete in unterschiedlicher Polarisation oder mit unterschiedlichen Längen ausgestattet sind, so dass die einzelnen Magneten aufgrund ihrer Magnetfeldsensorsignale voneinander unterscheidbar sind. Im Extremfall kann auch das Übertragungsmittel vollständig aus voneinander unterscheidbaren Magneten bestehen, z.B. indem eine Fahrradkette mit magnetischen Kettenglieder verwendet wird.

Der Magnetfeldsensor kann darüber hinaus auch derart ausgestaltet sein, dass er nur eine Raumrichtung der Magnetfeldstärke der Magnete erfasst, bevorzugt in Richtung der Fortbewegungsrichtung x oder der Hochachse y. Dies hat den Vorteil, dass in Abhängigkeit der Magnetfeldsensorsignale eine Bewegungsrichtung des Übertragungsmittels bzw. der Kette erkannt werden kann.

Besonders bevorzugt ist der Magnetfeldsensor im Bereich des Übertragungsmittels angeordnet, um die räumliche Distanz zu dem wenigstens einen Magneten so gering wie möglich zu halten. Hierbei eignet sich besonders die Unterbringung des Magnetfeldsensors im oder am Gehäuse eines Mittelmotorantriebs eines Elektrofahrrads. Dies hat den weiteren Vorteil, dass dadurch die Elektrifizierung des Magnetfeldsensors erleichtert wird.

Weitere Vorteile ergeben sich aus der nachfolgenden Beschreibung von Ausführungsbeispielen bzw. aus den abhängigen Patentansprüchen.

### Kurze Beschreibung der Zeichnungen

Figur 1 zeigt ein Zweirad, an dem die Erfindung eingesetzt werden kann. In
Figur 2 wird schematisch die Anordnung von Kettenblatt, Kette und Zahnkranzpaket am Hinterrad gezeigt, um die verschiedenen Übersetzungsverhältnisse darzustellen. Das Blockschaltbild nach Figur 3 zeigt eine mögliche Ausgestaltung einer erfindungsgemäßen Auswerteeinheit. In Figur 4 wird ein mögliches erfindungsgemäßes Auswerteverfahren beschrieben.

### Ausführungsformen der Erfindung

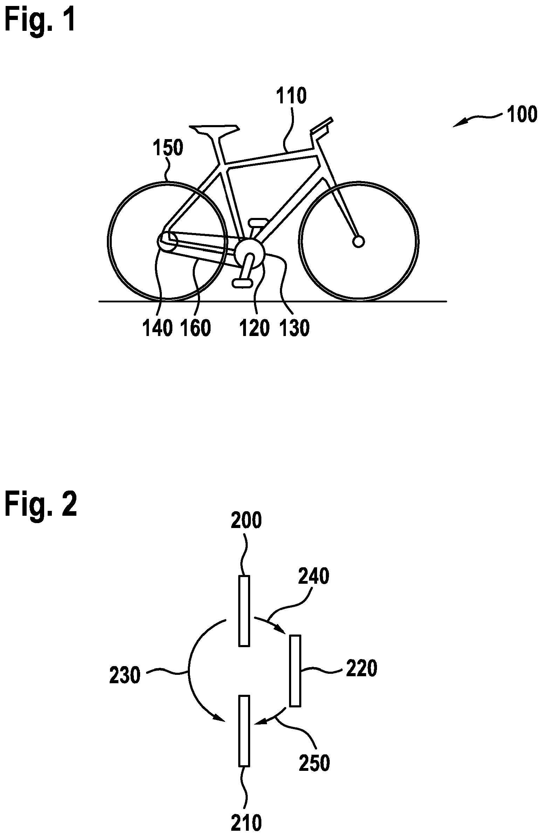

In der Figur 1 ist ein typisches Fahrrad dargestellt, an dem die für die Erfindung wesentlichen Komponenten erklärt werden sollen. Selbstverständlich kann die Erfindung auch an jedem anderen Zweirad und insbesondere Elektrofahrrad angewandt werden, unabhängig von der Darstellung

Das Fahrrad 100 gemäß der Figur 1 weist einen Rahmen 110 auf, an dessen unteren Ende eine Antriebseinheit 120 angebracht ist. Diese Antriebseinheit 120 ist bei einem normalen Fahrrad in Form einer Tretkurbel realisiert. Durch die muskuläre Betätigung dieser Tretkurbel kann der Fahrer das Fahrrad bewegen. Bei einem Elektrofahrrad ist dieser Antriebseinheit 120 ein Elektromotor zugeordnet, der den Fahrer beim Fahren unterstützen kann. Hierzu wird die Trittkraft oder auch das Tretdrehmoment des Fahrers auf die Tretkurbel erfasst und je nach Unterstützungsgrad der Motor zur Erzeugung eines weiteren Motordrehmoments angesteuert. Das so erzeugte Drehmoment bestehend aus Fahrerdrehmoment mit gegebenenfalls unterstützendem Motordrehmoment wird mittels eines einem Übertragungsmittel 160 vom an der Antriebseinheit 120 angebrachten Kettenblatt 130 auf den Zahnkranz oder den Kettenkranz 140 der Gangschaltung am als Abtriebsrad fungierenden Hinterrad 150 übertragen. Je nach eingelegtem Gang am Kettenkranz erfolgt dann die Umsetzung des erzeugten Drehmoments an der Antriebseinheit 120 zur Fortbewegung des Fahrrads 100.

Anhand der Figur 2 sollen im nachfolgenden die möglichen Übersetzungsverhältnisse am Fahrrad verdeutlicht werden. Die Antriebseinheit 120 ist mit einem Kettenblatt 200 verbunden, über das das Übertragungsmittel 220, z.B. die Fahrradkette oder ein Riemen, das durch den Fahrer und/oder den Elektromotor erzeugte Drehmoment auf das Abtriebsrad 210 bzw. das mit einer Gangschaltung, einem Kettenkranz, einem Zahnkranzpaket oder einer Kassette ausgestattetem Hinterrad überträgt. Um das Übersetzungsverhältnis klar zu bestimmen, muss zunächst klar gestellt werden, welches Übersetzungsverhältnis berücksichtigt werden soll. Das Gesamtübersetzungsverhältnis 230, welches mittels einer ersten Übersetzungsgröße i_Ges dargestellt werden soll, stellt das Übersetzungsverhältnis zwischen Antriebseinheit 200 und dem Abtriebsrad 210 dar. Alleine aus dieser ersten Übersetzungsgröße i_Ges lässt sich nicht ableiten, welcher Gang bzw. welches Übersetzungsverhältnis 250 gemäß einer dritten Übertragungsgröße i_Kassette an der Gangschaltung bzw. der Kassette am Hinterrad eingestellt wird. Darüber hinaus lässt sich auch nicht das Übersetzungsverhältnis 240 gemäß einer zweiten Übertragungsgröße i_Kettenblatt zwischen Antriebseinheit 200 und Übertragungsmittel 220 ableiten, falls der Antriebseinheit 200 mehrere unterschiedlich großer Kettenblätter zur Verfügung stehen. Steht der Antriebseinheit 200 nur ein Kettenblatt zur Verfügung, würde die entsprechende zweite Übertragungsgröße i_Kettenblatt einen Wert von 1 aufweisen. Dieser Wert könnte sich jedoch ändern, falls der motorische Teil der Antriebseinheit ein internes Getriebe aufweist.

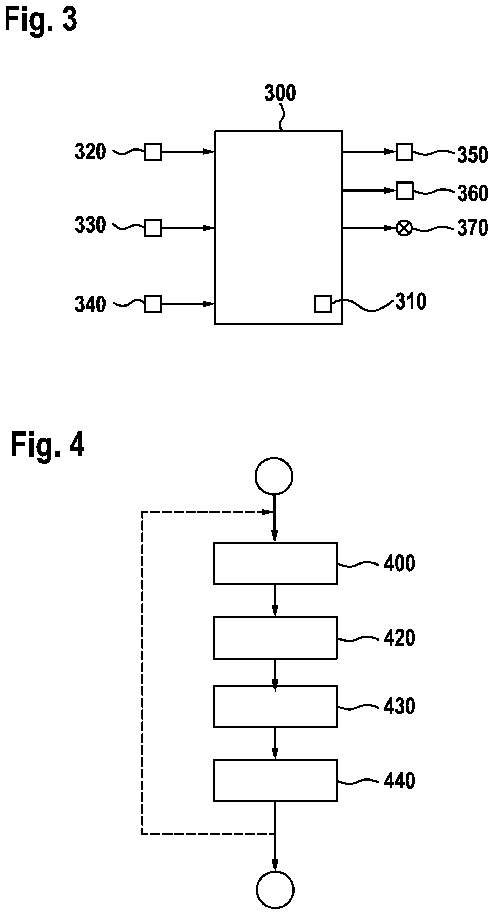

Zur Durchführung der erfindungsgemäßen Verfahren ist eine Auswerteeinheit 300 gemäß der Figur 3 vorgesehen, die auch als Teil einer Steuereinheit für die Ansteuerung bzw. Begrenzung eines Motordrehmoments bei einem Elektrofahrrad dienen kann. Die Auswerteinheit 300 weist dabei einen Speicher 310 auf, in dem beispielsweise die Parameter der im Übertragungsmittel 160, bzw. 220 eingebrachten Magnete abgespeichert sind. Darüber hinaus können hier auch Schwellenwerte für die Erfassung und Auswertung der Magnetfeldsensorsignale sowie möglicher Geschwindigkeitsbeschränkungen abgespeichert sein. Die Auswerteeinheit 300 erfasst mittels eines Magnetfeldsensors 320 die Magnetfeldsensorsignale wenigstens eines Magneten, der in dem Übertragungsmittel 220 angeordnet ist. Weiterhin wird die Drehzahl am Kettenblatt erfasst bzw. ermittelt. Hierzu kann die Drehzahl entweder über einen separaten Sensor 330 direkt bestimmt werden oder aufgrund der Information über die Ansteuerung des Motors und über eine eventuell in der Motoreinheit verbaute Getriebestufe abgeleitet werden. Optional oder alternativ kann auch die Drehzahl des Hinterrads erfasst werden, zum Beispiel über einen Reed-Sensor 340.

Aus den erfassten Magnetfeldsensorsignalen sowie der Drehzahl des Kettenblatts und/oder des Hinterrads kann anschließend auf die erste, zweite und/oder dritte Übersetzungsgröße geschlossen werden. Die so ermittelte Übersetzungsgröße kann auf einer Anzeige 350 angezeigt werden oder einer weiterer Steuereinheit 360 zur Erzeugung der Steuersignale für den Antriebsmotor weitergeleitet werden. Optional oder zusätzlich kann auch vorgesehen sein, dass die Auswerteeinheit 300 selbsttätig Steuersignale in Abhängigkeit wenigstens einer der abgeleiteten Übertragungsgrößen erzeugt. Hierbei kann es sich sowohl um Steuersignale für einen Elektromotor zum Antrieb oder zur Beschränkung des Antriebs bei Erkennung einer Geschwindigkeitsbeschränkung für das verwendete Antriebssystem handeln. Weiterhin ist möglich, basierend auf wenigstens einer abgeleiteten Übertragungsgröße die Gangschaltung 370 am Hinterrad und/oder an der Tretkurbel anzusteuern bzw. zu regeln.

Ein mögliches erfindungsgemäßes Verfahren ist in der Figur 4 dargestellt. Nach dem Start des Verfahrens werden in einem ersten Schritt 400 Magnetfeldsensorsignale des wenigstens einen magnetischen Elements im Übertragungsmittel erfasst. Ausgehend von diesen Magnetfeldsensorsignale, die beispielsweise permanent erfasst werden können, kann eine Umlauffrequenz des Übertragungsmittels errechnet werden. Hierbei kann zum Ausblenden von Fremdeinstreuungen von Magnetfeldsignalen ein Schwellenwert verwendet werden, der durch das Magnetfeldsensorsignal überschritten werden muss, um eindeutig eine Zuordnung der Signale zu dem überwachten Magneten herstellen zu können. Bei der Verwendung mehrerer Magnete im Übertragungsmittel ist zudem auch kein vollständigen Umlauf des Übertragungsmittels notwendig, um die Umlauffrequenz bestimmen zu können. Im zweiten Schritt 420 nach der Bestimmung der Umlauffrequenz erfolgt die Erfassung der Drehzahl der Kettenblattwelle. Wie bereits ausgeführt, kann diese Drehzahl durch einen separaten Sensor oder aufgrund der Ableitung von Betriebsparametern des Antriebsmotors erfolgen. In einem nachfolgenden dritten Schritt 430 wird die Drehzahl des Abtriebsrads bzw. des Hinterrads erfasst. Optional kann vorgesehen sein, dass von den Schritten 420 und 430 nur ein Schritt tatsächlich ausgeführt wird. Im letzten Schritt 440 kann dann aus den vorliegenden Informationen über die Umlauffrequenz des Übertragungsmittels sowie der Drehzahl des Kettenblatts und/oder des Hinterrads auf die erste Übertragungsgröße i_Ges (Gesamtübersetzung 230), die zweite Übertragungsgröße i_Kettenblatt (240) und/oder die dritte Übertragungsgröße i_Kassette (250) geschlossen werden. Dabei kann auch ohne die Information über die Drehzahl des Kettenblatts oder des Hinterrads auf die entsprechende Übertragungsgröße geschlossen werden, wie bereits vorstehend ausgeführt wurde. Anschließend wird das Verfahren beendet oder erneut mit der Erfassung von Magnetfeldsensorsignalen durchlaufen.

## Patentansprüche

1. Verfahren zur Erfassung eines Übersetzungsverhältnisses an einem Fahrrad (100), insbesondere an einem Elektrofahrrad, wobei vorgesehen ist, dass das Fahrrad (100) einen mit dem Rahmen (110) gekoppelten Magnetfeldsensor (320), eine mittels Muskelkraft und/oder elektrischem Motor betätigbare Antriebseinheit (120), ein Abtriebsrad (150, 210) mit einer Gangschaltung (140) und ein die Antriebseinheit (120) und die Gangschaltung (140) verbindendes Übertragungsmittel (160, 220) aufweist, wobei zur Erfassung des Übersetzungsverhältnisses
• mittels des Magnetfeldsensors (320) Magnetfeldsensorsignale wenigstens eines im Übertragungsmittel (160, 220) eingebrachten Magneten erfasst, und
• eine Drehzahl der Antriebseinheit (120) erfasst wird, und
• eine Drehzahl des Abtriebsrads (150, 210) erfasst wird, und
• in Abhängigkeit von den Magnetfeldsensorsignalen, der Drehzahl der Antriebseinheit (120) und der Drehzahl des Abtriebsrads (150, 210) eine erste Übersetzungsgröße (i_Ges) erzeugt wird, welche das Gesamtübersetzungsverhältnis von der Antriebseinheit auf das Abtriebsrad (150, 210) repräsentiert, und
• in Abhängigkeit von den Magnetfeldsensorsignalen, der Drehzahl der Antriebseinheit (120) und der Drehzahl des Abtriebsrads (150, 210) eine zweite Übersetzungsgröße (i_Kettenblatt) erzeugt wird, welches das Übersetzungsverhältnis von der Antriebseinheit auf das Übertragungsmittel (160, 220) repräsentiert.

2. Verfahren nach Anspruch 1, **dadurch gekennzeichnet, dass**
• In Abhängigkeit der ersten und zweiten Übersetzungsgröße (i_Ges , i_Kettenblatt) eine dritte Übersetzungsgröße (i_Kassette) erzeugt wird, welches das Übersetzungsverhältnis von dem Übertragungsmittel (160, 220) auf das Abtriebsrad (150, 210) repräsentiert.

3. Verfahren nach Anspruch 1, **dadurch gekennzeichnet, dass**
• in Abhängigkeit von den Magnetfeldsensorsignalen und der Drehzahl des Abtriebsrads (150, 210) eine dritte Übersetzungsgröße (i_Kassette) erzeugt wird, welches das Übersetzungsverhältnis von dem Übertragungsmittel (160, 220) auf das Abtriebsrad (150, 210) repräsentiert.

4. Verfahren nach Anspruch 3, **dadurch gekennzeichnet, dass**
• in Abhängigkeit der ersten und dritten Übersetzungsgröße (i_Ges , i_Kassette) eine zweite Übersetzungsgröße (i_Kettenblatt) erzeugt wird, welches das Übersetzungsverhältnis von der Antriebeinheit auf das Übertragungsmittel (160, 220) repräsentiert.

5. Verfahren nach einem der vorherigen Ansprüche, **dadurch gekennzeichnet, dass**
• in Abhängigkeit der Magnetfeldsensorsignale eine Umlauffrequenz des Übertragungsmittels ermittelt wird, und
• die erste, zweite und/oder dritte Übersetzungsgröße in Abhängigkeit von der Umlauffrequenz des Übertragungsmittels erzeugt wird.

6. Auswerteeinheit (300) zur Erfassung eines Übersetzungsverhältnisses an einem Fahrrad (100), insbesondere an einem Elektrofahrrad, wobei vorgesehen ist, dass das Fahrrad (100) einen mit dem Rahmen (110) gekoppelten Magnetfeldsensor (320), eine mittels Muskelkraft und/oder elektrischem Motor betätigbare Antriebseinheit (120), ein Abtriebsrad (150, 210) mit einer Gangschaltung (140) und ein die Antriebseinheit (120) und die Gangschaltung (140) verbindendes Übertragungsmittel (160, 220) aufweist, wobei die Auswerteeinheit (300) zur Erfassung des Übersetzungsverhältnisses ein Verfahren nach einem der Ansprüche 1 bis 5 ausführt, wobei die Auswerteeinheit (300)
• mittels des Magnetfeldsensors (320) Magnetfeldsensorsignale wenigstens eines im Übertragungsmittel (160, 220) eingebrachten Magneten erfasst, und
• eine Drehzahl der Antriebseinheit (120) erfasst, und
• eine Drehzahl des Abtriebsrads (150, 210) erfasst, und
• in Abhängigkeit von den Magnetfeldsensorsignalen, der Drehzahl der Antriebseinheit (120) und der Drehzahl des Abtriebsrads (150, 210) eine erste Übersetzungsgröße (i_Ges) erzeugt, welche das Gesamtübersetzungsverhältnis von der Antriebeinheit auf das Abtriebsrad (150, 210) repräsentiert, und
• in Abhängigkeit von den Magnetfeldsensorsignalen, der Drehzahl der Antriebseinheit (120) und der Drehzahl des Abtriebsrads (150, 210) eine zweite Übersetzungsgröße (i_Kettenblatt) erzeugt, welche das Übersetzungsverhältnis von der Antriebeinheit auf das Übertragungsmittel (160, 220) repräsentiert.

7. Auswerteeinheit (300) nach Anspruch 6, **dadurch gekennzeichnet, dass** die Auswerteeinheit (300)
• in Abhängigkeit von den Magnetfeldsensorsignalen und der Drehzahl des Abtriebsrads (150, 210) eine dritte Übersetzungsgröße (i_Kassette) erzeugt, welches das Übersetzungsverhältnis von dem Übertragungsmittel (160, 220) auf das Abtriebsrad (150, 210) repräsentiert.

8. Auswerteeinheit (300) nach einem der Ansprüche 6 oder 7, **dadurch gekennzeichnet, dass** die Auswerteeinheit (300)
• in Abhängigkeit der Magnetfeldsensorsignale eine Umlauffrequenz des Übertragungsmittels ermittelt, und
• die erste, zweite und/oder dritte Übersetzungsgröße in Abhängigkeit von der Umlauffrequenz des Übertragungsmittels erzeugt.

9. Fahrrad (100), insbesondere ein Elektrofahrrad, mit einer Auswerteeinheit (300) zur Erfassung eines Übersetzungsverhältnisses an dem Fahrrad (100), insbesondere eine Auswerteinheit nach einem der Ansprüche 6 bis 8, wobei das Fahrrad (100)
• einen mit dem Rahmen (110) gekoppelten Magnetfeldsensor (320),
• eine mittels Muskelkraft und/oder elektrischem Motor betätigbare Antriebseinheit (120),
• ein Abtriebsrad (150, 210) mit einer Drehzahlerfassungseinheit und einer Gangschaltung (140), und
• ein die Antriebseinheit (120) und die Gangschaltung (140) verbindendes Übertragungsmittel (160, 220)
aufweist,
wobei
die Auswerteeinheit (300) zur Erfassung des Übersetzungsverhältnisses
• mittels des Magnetfeldsensors (320) Magnetfeldsensorsignale wenigstens eines im Übertragungsmittel (160, 220) eingebrachten Magneten erfasst, und
• eine Drehzahl der Antriebseinheit (120) und des Abtriebsrads (150, 210) erfasst, und
• in Abhängigkeit von
∘ den Magnetfeldsensorsignalen, und der Drehzahl der Antriebseinheit (120), und der Drehzahl des Abtriebsrads (150, 210)
▪ eine erste Übersetzungsgröße (i_Ges) erzeugt, welche das Gesamtübersetzungsverhältnis von der Antriebseinheit auf das Abtriebsrad (150, 210) repräsentiert und
▪ eine zweite Übersetzungsgröße (i_Kettenblatt) erzeugt, welche das Übersetzungsverhältnis von der Antriebeinheit auf das Übertragungsmittel (160, 220) repräsentiert.

10. Fahrrad (100) nach Anspruch 9, **dadurch gekennzeichnet, dass** das Übertragungsmittel (160, 220) mehrere, insbesondere äquidistant angebrachte Magnete aufweist.

11. Fahrrad (100) nach einem der Ansprüche 9 oder 10, **dadurch gekennzeichnet, dass** das Übertragungsmittel (160, 220) als Fahrradkette realisiert wird, wobei insbesondere vorgesehen ist, dass alle Kettenglieder magnetisch ausgestaltet sind.

12. Fahrrad (100) nach einem der Ansprüche 9 bis 11, mit
• einer Antriebseinheit (120), die eine Tretkurbel und einen elektrischen Motor zur Erzeugung eines Vortriebs, und
• eine Steuereinheit (300) zur Erzeugung von Steuersignalen für den elektrischen Motor in Abhängigkeit eines Betätigungssignals der Tretkurbel
aufweist,
**dadurch gekennzeichnet, dass**
• die Steuereinheit (300) in Abhängigkeit des Erkennens eines fehlerhaften Betätigungssignals der Tretkurbel die Steuersignale in Abhängigkeit der dritten Übersetzungsgröße (i_Kassette) erzeugt.

## Claims

1. Method for identifying a transmission ratio on a bicycle (100), in particular on an electric bicycle, wherein there is provision that the bicycle (100) has a magnetic field sensor (320) which is coupled to the frame (110), a drive unit (120) which can be activated by means of muscle power and/or an electric motor, an output gear (150, 210) with a gear shift (140), and a transmission means (160, 220) which connects the drive unit (120) and the gear shift (140), wherein in order to detect the transmission ratio
• magnetic field sensor signals of at least one magnet which is mounted in the transmission means (160, 220) is detected by means of the magnetic field sensor (320), and
• a rotational speed of the drive unit (120) is sensed, and
• a rotational speed of the output gear (150, 210) is sensed, and
• a first transmission variable (i_Ges), which represents the overall transmission ratio from the drive unit to the output gear (150, 210), is generated as a function of the magnetic field sensor signals, the rotational speed of the drive unit (12) and the rotational speed of the output gear (150, 210), and
• a second transmission variable (i_Kettenblatt), which represents the transmission ratio from the drive unit to the transmission means (160, 220), is generated as a function of the magnetic field sensor signals, the rotational speed of the drive unit (120) and the rotational speed of the output gear (150, 210).

2. Method according to Claim 1, **characterized in that**
• a third transmission variable (i_Kassette), which represents the transmission ratio from the transmission means (160, 220) to the output gear (150, 210), is generated as a function of the first and second transmission variables (i_Ges, i_Kettenblatt).

3. Method according to Claim 1, **characterized in that**
• a third transmission variable (i_Kassette), which represents the transmission ratio from the transmission means (160, 220) to the output gear (150, 210), is generated as a function of the magnetic field sensor signals and the rotational speed of the output gear (150, 210).

4. Method according to Claim 3, **characterized in that**
• a second transmission variable (i_Kettenblatt), which represents the transmission ratio from the drive unit to the transmission means (160, 220), is generated as a function of the first and third transmission variables (i_Ges, i_Kassette).

5. Method according to one of the preceding claims, **characterized in that**
• a revolution frequency of the transmission means is determined as a function of the magnetic field sensor signals, and
• the first, second and/or third transmission variables are generated as a function of the revolution frequency of the transmission means.

6. Evaluation unit (300) for identifying a transmission ratio on a bicycle (100), in particular on an electric bicycle, wherein there is provision that the bicycle (100) has a magnetic field sensor (320) which is coupled to the frame (110), a drive unit (120) which can be activated by means of muscle power and/or an electric motor, an output gear (150, 210) with a gear shift (140), and a transmission means (160, 220) which connects the drive unit (120) and the gear shift (140), wherein in order to detect the transmission ratio the evaluation unit (300) carries out a method according to one of Claims 1 to 5, wherein the evaluation unit (300) detects
• magnetic field sensor signals of at least one magnet which is mounted in the transmission means (160, 220) by means of the magnetic field sensor (320), and
• a rotational speed of the drive unit (120) is sensed, and
• a rotational speed of the output gear (150, 210) is sensed, and
• a first transmission variable (i_Ges), which represents the overall transmission ratio from the drive unit to the output gear (150, 210), is generated as a function of the magnetic field sensor signals, the rotational speed of the drive unit (12) and the rotational speed of the output gear (150, 210), and
• a second transmission variable (i_Kattenblatt), which represents the transmission ratio from the drive unit to the transmission means (160, 220), is generated as a function of the magnetic field sensor signals, the rotational speed of the drive unit (120) and the rotational speed of the output gear (150, 210).

7. Evaluation unit (300) according to Claim 6, **characterized in that** the evaluation unit (300)
• generates a third transmission variable(i_Kassette), which represents the transmission ratio from the transmission means (160, 220) to the output gear (150, 210), as a function of the magnetic field sensor signals and the rotational speed of the output gear (150, 210) .

8. Evaluation unit (300) according to one of Claims 6 and 7, **characterized in that** the evaluation unit (300)
• determines a revolution frequency of the transmission means as a function of the magnet field sensor signals, and
• generates the first, second and/or third transmission ratios as a function of the revolution frequency of the transmission means.

9. Bicycle (100), in particular an electric bicycle, having an evaluation unit (300) for detecting a transmission ratio at the bicycle (100), in particular an evaluation unit according to one of Claims 6 to 8, wherein the bicycle (100) has
• a magnetic field sensor (320) which is coupled to the frame (110),
• a drive unit (120) which can be activated by means of muscle power and/or electric motor,
• an output gear (150, 210) with a rotational speed detection unit and a gear shift (140), and
• a transmission means (160, 220) which connects
the drive unit (120) and the gear shift (140), in order to sense the transmission ratio the evaluation unit (300) senses
• by means of the magnetic field sensor (320) magnetic field sensor signals of at least one magnet which is mounted in the transmission means (160, 220), and
• a rotational speed of the drive unit (120) and of the output gear (150, 210), and
• generates as a function of
∘ the magnetic field sensor signals and the rotational speed of the drive unit (120) and the rotational speed of the output gear (150, 210),
▪ a first transmission variable (i_Ges) which represents the overall transmission ratio from the drive unit to the output gear (150, 210), and
▪ generates a second transmission variable (i_Kettenblatt) which represents the transmission ratio from the drive unit to the transmission means (160, 220).

10. Bicycle (100) according to Claim 9, **characterized in that** the transmission means (160, 220) has a plurality of, in particular equidistantly mounted, magnets.

11. Bicycle (100) according to one of Claims 9 and 10, **characterized in that** the transmission means (160, 220) is implemented as a bicycle chain, wherein there is in particular provision that all the chain elements are configured so as to be magnetic.

12. Bicycle (100) according to one of Claims 9 to 11, having
• a drive unit (120) which has a pedal crank and an electric motor for generating propulsion, and
• a drive unit (300) for generating control signals for the electric motor as a function of an activation signal of the pedal crank, **characterized in that**
• the control unit (300) generates the control signals as a function of the third transmission variable (i_Kassette), as a function of the detection of a faulty activation signal of the pedal crank.

## Revendications

1. Procédé permettant de détecter un braquet sur une bicyclette (100), en particulier sur une bicyclette électrique, dans lequel il est prévu que la bicyclette (100) présente un capteur de champ magnétique (320) couplé au cadre (110), une unité d'entraînement (120) pouvant être actionnée par la force musculaire humaine et/ou par un moteur électrique, une roue entraînée (150, 210) dotée d'un dérailleur (140), et un moyen de transmission (160, 220) reliant l'unité d'entraînement (120) et le dérailleur (140), dans lequel, pour la détection du braquet
• des signaux de capteur de champ magnétique d'au moins un aimant incorporé dans le moyen de transmission (160, 220) sont détectés au moyen du capteur de champ magnétique (320), et
• une vitesse de rotation de l'unité d'entraînement (120) est détectée, et
• une vitesse de rotation de la roue entraînée (150, 210) est détectée, et
• en fonction des signaux de capteur de champ magnétique, de la vitesse de rotation de l'unité d'entraînement (120) et de la vitesse de rotation de la roue entraînée (150, 210), une première grandeur de braquet (i_Ges) est générée qui représente le braquet global entre l'unité d'entraînement et la roue entraînée (150, 210), et
• en fonction des signaux de capteur de champ magnétique, de la vitesse de rotation de l'unité d'entraînement (120) et de la vitesse de rotation de la roue entraînée (150, 210), une deuxième grandeur de braquet (i_Kettenblatt) est générée qui représente le braquet entre l'unité d'entraînement et le moyen de transmission (160, 220).

2. Procédé selon la revendication 1, **caractérisé en ce que**
• en fonction de la première et de la deuxième grandeur de braquet (i_Ges, i_Kettenblatt), une troisième grandeur de braquet (i_Kassette) est générée qui représente le braquet entre le moyen de transmission (160, 220) et la roue entraînée (150, 210) .

3. Procédé selon la revendication 1, **caractérisé en ce que**
• en fonction des signaux de capteur de champ magnétique et de la vitesse de rotation de la roue entraînée (150, 210), une troisième grandeur de braquet (i_Kassette) est générée qui représente le braquet entre le moyen de transmission (160, 220) et la roue entraînée (150, 210).

4. Procédé selon la revendication 3, **caractérisé en ce que**
• en fonction de la première et de la troisième grandeur de braquet (i_Ges, i_Kassette), une deuxième grandeur de braquet (i_Kettenblatt) est générée qui représente le braquet entre l'unité d'entraînement et le moyen de transmission (160, 220).

5. Procédé selon l'une quelconque des revendications précédentes, **caractérisé en ce que**
• en fonction des signaux de capteur de champ magnétique, une fréquence de rotation du moyen de transmission est établie, et
• la première, la deuxième et/ou la troisième grandeur de braquet sont générées en fonction de la fréquence de rotation du moyen de transmission.

6. Unité d'évaluation (300) permettant de détecter un braquet sur une bicyclette (100), en particulier sur une bicyclette électrique, dans laquelle il est prévu que la bicyclette (100) présente un capteur de champ magnétique (320) couplé au cadre (110), une unité d'entraînement (120) pouvant être actionnée par la force musculaire humaine et/ou par un moteur électrique, une roue entraînée (150, 210) dotée d'un dérailleur (140), et un moyen de transmission (160, 220) reliant l'unité d'entraînement (120) et le dérailleur (140), l'unité d'évaluation (300) effectuant un procédé selon l'une quelconque des revendications 1 à 5 pour détecter le braquet, l'unité d'évaluation (300)
• détectant au moyen du capteur de champ magnétique (320) des signaux de capteur de champ magnétique d'au moins un aimant incorporé dans le moyen de transmission (160, 220), et
• détectant une vitesse de rotation de l'unité d'entraînement (120), et
• détectant une vitesse de rotation de la roue entraînée (150, 210), et
• en fonction des signaux de capteur de champ magnétique, de la vitesse de rotation de l'unité d'entraînement (120) et de la vitesse de rotation de la roue entraînée (150, 210), générant une première grandeur de braquet (i_Ges) qui représente le braquet global entre l'unité d'entraînement et la roue entraînée (150, 210), et
• en fonction des signaux de capteur de champ magnétique, de la vitesse de rotation de l'unité d'entraînement (120) et de la vitesse de rotation de la roue entraînée (150, 210), générant une deuxième grandeur de braquet (i_Kettenblatt) qui représente le braquet entre l'unité d'entraînement et le moyen de transmission (160, 220).

7. Unité d'évaluation (300) selon la revendication 6, **caractérisée en ce que** l'unité d'évaluation (300)
• en fonction des signaux de capteur de champ magnétique et de la vitesse de rotation de la roue entraînée (150, 210), génère une troisième grandeur de braquet (i_Kassette) qui représente le braquet entre le moyen de transmission (160, 220) et la roue entraînée (150, 210).

8. Unité d'évaluation (300) selon l'une quelconque des revendications 6 et 7, **caractérisée en ce que** l'unité d'évaluation (300)
• établit une fréquence de rotation du moyen de transmission en fonction des signaux de capteur de champ magnétique, et
• génère la première, la deuxième et/ou la troisième grandeur de braquet en fonction de la fréquence de rotation du moyen de transmission.

9. Bicyclette (100), en particulier une bicyclette électrique, comprenant une unité d'évaluation (300) permettant de détecter un braquet sur la bicyclette (100), en particulier une unité d'évaluation selon l'une quelconque des revendications 6 à 8, la bicyclette (100) présentant
• un capteur de champ magnétique (320) couplé au cadre (110),
• une unité d'entraînement (120) pouvant être actionnée par la force musculaire humaine et/ou par un moteur électrique,
• une roue entraînée (150, 210) dotée d'une unité de détection de vitesse de rotation et d'un dérailleur (140), et
• un moyen de transmission (160, 220) reliant l'unité d'entraînement (120) et le dérailleur (140), dans laquelle, pour détecter le braquet, l'unité d'évaluation (300)
• détecte au moyen du capteur de champ magnétique (320) des signaux de capteur de champ magnétique d'au moins un aimant incorporé dans le moyen de transmission (160, 220), et
• détecte une vitesse de rotation de l'unité d'entraînement (120) et de la roue entraînée (150, 210), et
• en fonction
o des signaux de capteur de champ magnétique et de la vitesse de rotation de l'unité d'entraînement (120) et de la vitesse de rotation de la roue entraînée (150, 210)
• génère une première grandeur de braquet (i_Ges) qui représente le braquet global entre l'unité d'entraînement et la roue entraînée (150, 210), et
• génère une deuxième grandeur de braquet (i_Kettenblatt) qui représente le braquet entre l'unité d'entraînement et le moyen de transmission (160, 220).

10. Bicyclette (100) selon la revendication 9, **caractérisée en ce que** le moyen de transmission (160, 220) présente plusieurs aimants, en particulier montés de manière équidistante.

11. Bicyclette (100) selon l'une quelconque des revendications 9 et 10, **caractérisée en ce que** le moyen de transmission (160, 220) est réalisé sous la forme d'une chaîne de bicyclette, dans laquelle il est prévu en particulier que tous les maillons soient réalisés de façon magnétique.

12. Bicyclette (100) selon l'une quelconque des revendications 9 à 11, comprenant
• une unité d'entraînement (120) qui présente une manivelle de pédalier et un moteur électrique pour générer une propulsion, et
• une unité de commande (300) pour générer des signaux de commande pour le moteur électrique en fonction d'un signal d'actionnement de la manivelle de pédalier,
**caractérisée en ce que**
• l'unité de commande (300) génère, en fonction de la reconnaissance d'un signal d'actionnement erroné de la manivelle de pédalier, les signaux de commande en fonction de la troisième grandeur de braquet (i_Kassette).
